# EUROPÄISCHE PATENTSCHRIFT

(11) **EP 0 802 081 B1**
(45) Veröffentlichungstag und Bekanntmachung des Hinweises auf die Patenterteilung: **27.02.2002**
(21) Anmeldenummer: 97106211.2
(22) Anmeldetag: 16.04.1997
(51) Int. Cl.: B60Q 1/14, B60Q 1/20

(54) **Rückleuchte eines Fahrzeuges, vorzugsweise eines Kraftfahrzeuges**
Rear lights for vehicle
Feux arrières pour véhicule

(30) Priorität: 20.04.1996 DE 19615808
(43) Veröffentlichungstag der Anmeldung: 22.10.1997
(73) Patentinhaber: Reitter & Schefenacker GmbH & Co. KG, 73730 Esslingen (DE)
(72) Erfinder: Zimmermann, Werner, 73113 Ottenbach (DE); Kusuma, Djuanarto, 96472 Rödental (DE); Haf, Helmut, 71409 Schwaikheim (DE); Gauch, Winfried, 71106 Magstadt (DE)
(74) Vertreter: Kohl, Karl-Heinz

(56) Entgegenhaltungen:
- EP-A- 0 230 620
- DE-A- 3 840 464
- FR-A- 2 262 612
- FR-A- 2 560 353
- FR-A- 2 676 977

## Beschreibung

Die Erfindung betrifft eine Rückleuchte eines Fahrzeuges, vorzugsweise eines Kraftfahrzeuges, nach dem Oberbegriff des Anspruches 1.

Beim Fahren im Regen, im Schnee und dergleichen tritt das Problem auf, daß das Lichtfenster der Rückleuchte verschmutzt. Dann sind die jeweiligen Signallichter der Rückleuchte von nachfolgenden Verkehrsteilnehmern nur schlecht zu erkennen. Aus diesem Grunde ist es bekannt, das Lichtfenster der Rückleuchte im Querschnitt mäanderförmig auszubilden. Dadurch soll ein Festhalten von Schmutz verhindert werden.

Bei der gattungsgemäßen Rückleuchte (FR-A-2 560 353) wird die Helligkeit einer Nebelschlußleuchte dadurch geregelt, daß ein Teil der von der Rückleuchte nach hinten ausgesandten und an der Nebelwand reflektierten Strahlen von einem Sensor erfaßt werden. Er sorgt beispielsweise dafür, daß die Nebelschlußleuchte bei Auftreten von Nebel eingeschaltet und beim Verlassen einer Nebelwand wieder ausgeschaltet wird.

Der Erfindung liegt die Aufgabe zugrunde, die gattungsgemäße Rückleuchte so auszubilden, daß auf einfache Weise sichergestellt ist, daß die von den Leuchtmitteln in der Rückleuchte ausgesandten Strahlen auch bei verschmutztem Lichtfenster von nachfolgenden Verkehrsteilnehmern zuverlässig erfaßt werden können.

Diese Aufgabe wird bei der gattungsgemäßen Rückleuchte erfindungsgemäß mit den kennzeichnenden Merkmalen des Anspruches 1 gelöst.

Bei der erfindungsgemäßen Rückleuchte sorgt der lichtempfindliche Sensor dafür, daß die Leuchtstärke der in der Rückleuchte untergebrachten Leuchtmittel in Abhängigkeit vom Verschmutzungsgrad des Lichtfensters geändert wird. Die von den Leuchtmitteln innerhalb der Rückleuchte ausgesandten Strahlen werden an der Schmutzschicht auf der Außenseite des Lichtfensters reflektiert und gelangen zum lichtempfindlichen Sensor. Er sendet entsprechende Signale an die Regelung, die ihrerseits die Leuchtstärke der jeweils eingeschalteten bzw. betätigten Leuchtmittel steuert. Je nach Verschmutzung des Lichtfensters wird die Leuchtstärke erhöht, so daß gewährleistet ist, daß trotz verschmutztem Lichtfenster ausreichend Licht nach hinten abgestrahlt wird.

Der lichtempfindliche Sensor sorgt, wenn beispielsweise infolge intensiver Sonneneinstrahlung viel Licht von außen auf das Lichtfenster fällt, beispielsweise dafür, daß die Leuchtstärke der jeweils eingeschalteten bzw. betätigten Leuchtmittel erhöht wird. Dadurch wird ebenfalls sichergestellt, daß auch bei starker Sonneneinstrahlung auf das Lichtfenster die jeweiligen Leuchtmittel der Rückleuchte von nachfolgenden Verkehrsteilnehmern deutlich erkennbar sind.

Bei einer Ausbildung entsprechend Anspruch 11 wird erreicht, daß nachfolgende Verkehrsteilnehmer durch die erhöhte Leuchtstärke der Leuchtmittel nicht geblendet werden. Das von nachfolgenden Verkehrsteilnehmern ausgesandte Scheinwerferlicht fällt auf den Innenrückblickspiegel des vorausfahrenden Fahrzeuges. Am Innenrückblickspiegel oder in dessen Bereich befindet sich mindestens ein Sensor, auf den das Scheinwerferlicht fällt und der entsprechende Signale an die Steuerung liefert. Sie regelt die Leuchtstärke der Leuchtmittel so weit herunter, daß der Fahrer des nachfolgenden Fahrzeuges nicht geblendet wird. In diese Messung können selbstverständlich auch andere Sensoren einbezogen werden.

Bei einer Ausbildung gemäß Anspruch 13 wird beim Bremsen des Fahrzeuges die Leuchtstärke des Bremslichtes erhöht. Nachfolgende Verkehrsteilnehmer können dann frühzeitig erkennen, daß das vorausfahrende Fahrzeug abbremst.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen:
- Fig. 1: ein Blockschaltbild einer erfindungsgemäßen Rückleuchte,
- Fig. 2: ein Schaltbild eines Teils der Rückleuchte gemäß Fig. 1,
- Fig. 2a: den Schaltzustand eines Synchrongleichrichters der erfindungsgemäßen Rückleuchte bei Vorliegen eines Takt-High-Signals,
- Fig. 2b: den Schaltzustand eines Synchrongleichrichters der erfindungsgemäßen Rückleuchte bei Vorliegen eines Takt-Low-Signals,
- Fig. 3: einen Stromlaufplan einer Takt-Ausfallüberwachungseinrichtung,
- Fig. 3a: das Prinzip und die Signale der Takt-Überwachungseinrichtung gemäß Fig. 3 bei fehlerlosem zu überwachendem Signal,
- Fig. 4 und 5: jeweils in einem Spannungs-Zeit-Diagramm die an zwei Eingängen des Synchrongleichrichters anliegenden Eingangssignalpegel,
- Fig. 6a: in einem Spannungs-Zeit-Diagramm den Signalpegel des Synchrongleichrichters nach der Gleichrichtung,
- Fig. 6b: in einem Spannungs-Zeit-Diagramm den Signalpegel des Synchrongleichrichters nach der Glättung,
- Fig. 7: in schematischer Darstellung eine zweite Ausführungsform einer erfindungsgemäßen Rückleuchte.

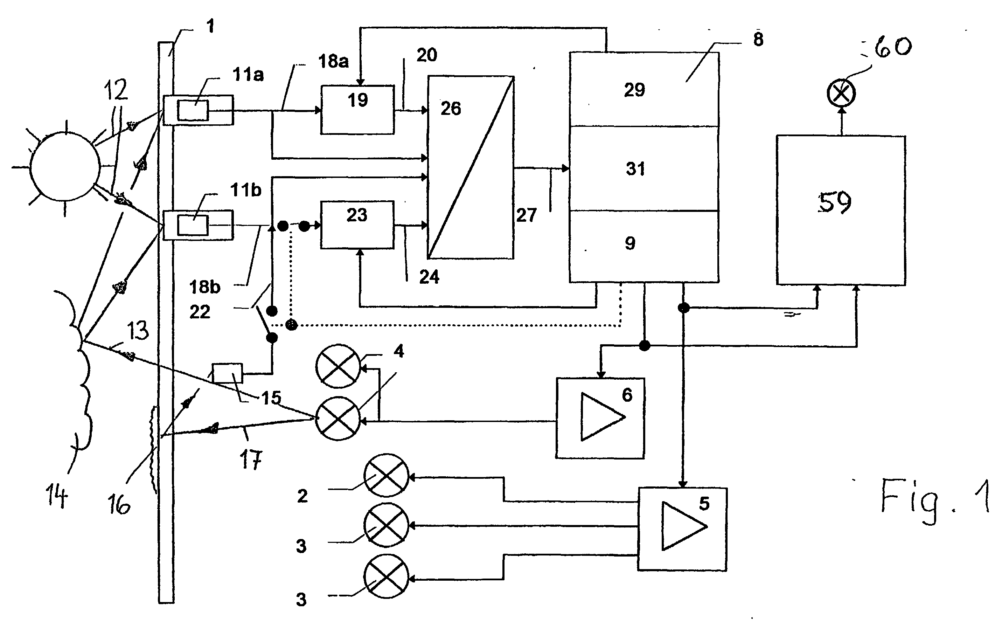

Fig. 1 zeigt einen Teil einer Rückleuchte eines Kraftfahrzeuges. Die Rückleuchte hat ein Lichtfenster 1, hinter dem Leuchtmittel 2 bis 4 angeordnet sind. Das Leuchtmittel 2 ist ein Bremslicht. Die beiden Leuchtmittel 3 und 4 bilden zwei Blinkleuchten und zwei Schlußleuchten.

Die Leuchtmittel 2 bis 4 sind im dargestellten Ausführungsbeispiel Glühlampen, können aber auch wenigstens zum Teil beispielsweise durch LEDs gebildet sein. Die Leuchtmittel 2 bis 4 sind an das Kraftfahrzeugnetz angeschlossen. Das Lichtfenster 1 ist im Bereich vor den einzelnen Leuchtmitteln 2 bis 4 vorteilhaft im vorgeschriebenen Farbton gehalten. Das Bremslicht 2 und die Blinkleuchten 3 sind an ein Leistungsteil 5 angeschlossen, das mit dem Kraftfahrzeugnetz verbunden ist. Das Leistungsteil 5 kann selbstverständlich auch zweigeteilt sein. Die Schlußleuchten 4 sind an ein weiteres Leistungsteil 6 angeschlossen, das ebenfalls mit dem Kraftfahrzeugnetz elektrisch verbunden ist.

Beide Leistungsteile 5, 6 sind an einen Mikroprozessor 8 angeschlossen. Er sendet in noch zu beschreibender Weise Signale an die Leistungsteile 5, 6, um die Leuchtstärke der jeweiligen Leuchtmittel 2 bis 4 an die außerhalb der Rückleuchte herrschenden Beleuchtungsbedingungen automatisch anzupassen.

Innerhalb der Rückleuchte sitzt hinter dem Lichtfenster 1 wenigstens ein Sensor 11, der so angeordnet ist, daß von außen auf die Rückleuchte fallendes Sonnenlicht 12 auf den Sensor 11 fällt. Der Sensor 11 erhält außerdem von den Schlußleuchten 4 ausgesandte und beispielsweise an Schnee-, Nebel- oder Gischtteilchen 14 reflektierte Strahlen 13. Diese Strahlen 13 werden beim Fahren während Schneefall, im Nebel oder bei Gischtbildung bei starkem Regen an den Teilchen 14 zumindest teilweise reflektiert. Im dargestellten Ausführungsbeispiel sind zwei Sensoren 11a, 11b vorgesehen, die vorzugsweise unmittelbar an der Rückseite des Lichtfensters 1 angeordnet sind.

Hinter dem Lichtfenster 1 ist mit Abstand außerdem mindestens ein weiterer Sensor 15 angeordnet, der als Schmutzsensor arbeitet. Ist das Lichtfenster 1 an seiner Außenseite mit Schmutz 16 bedeckt, dann wird zumindest ein Teil des von den Schlußleuchten 4 ausgesandten Lichts an der Schmutzschicht 16 zum Schmutzsensor 15 reflektiert. Dies ist in Fig. 1 durch den Pfeil 17 schematisch dargestellt. Mit den Sensoren 11a, 11b, 15 lassen sich somit die Leuchtmittel 2 bis 4 an unterschiedliche Lichtverhältnisse derart anpassen, daß auch bei verschmutztem Lichtfenster 1 und/oder starker Sonneneinstrahlung und/oder beim Fahren bei Schneefall, im Nebel oder beim Auftreten von Gischt ein ausreichend starkes Licht durch das Lichtfenster 1 nach hinten fällt, so daß nachfolgende Verkehrsteilnehmer das vorausfahrende Fahrzeug zuverlässig erkennen können.

Das vom Sensor 11a erzeugte Signal 18a wird einem Gleichrichter 19, vorzugsweise einem synchronen Gleichrichter, zugeführt, der ein entsprechend gleichgerichtetes Signal 20 einem Analog/Digital-Wandler 26 zuführt.

Das vom Sensor 11b ausgesandte Signal 18b wird dem Gleichrichter 23 zugeführt, der ebenfalls vorteilhaft ein synchroner Gleichrichter ist. Die von ihm gleichgerichteten Signale 24 werden dem Analog/Digital-Wandler 26 zugeführt. Der Ausgang 27 des Analog/Digital-Wandlers 26 ist an den Mikroprozessor 8 angeschlossen, in dem die ankommenden Signale verarbeitet werden.

Auch das vom Schmutzsensor 15 ausgesancte Signal 22 wird durch einen nachgeschalteten Gleichrichter 23, der vorzugsweise ein synchroner Gleichrichter ist, verarbeitet. Das gleichgerichtete Signal 24 wird ebenfalls dem Analog/Digital-Wandler 26 zugeführt. Der Ausgang 27 des Analog/Digital-Wandlers 26 ist an den Mikroprozessor 8 angeschlossen. Die ankommenden Signale werden im Mikroprozessor 8 in noch zu beschreibender Weise verarbeitet.

Die beiden Leistungsteile 5, 6 sind mit der elektrischen Versorgung des Fahrzeuges verbunden, die bei eingeschaltetem Fahrtlichtschalter den nötigen Strom für die Leuchtmittel liefert. Die Schlußleuchten 4 werden über das Leistungsteil 6 von einem Pulsweitenmodulator 9 des Mikroprozessors 8 getaktet. Das Puls-Pausen-Verhältnis wird bei erstmaligem Einschalten der Schlußleuchten 4 auf einen voreingestellten Minimalwert geregelt. Das dadurch modulierte, von den Schlußleuchten 4 ausgesandte Licht 13, 17 tritt durch das Lichtfenster 1 nach außen. Bei schlechten äußeren Sichtverhältnissen infolge Schneefalls, Nebels oder infolge starker Wasserbildung (Gischt) wird das austretende Licht 13 an den Schneeflocken, der Nebelwand oder an der Gischt 14 reflektiert bzw. gestreut, wie in Fig. 1 schematisch dargestellt ist. Das Licht 17 kann auch durch Schmutz 16 auf der Außenseite des Lichtfensters 1 reflektiert werden.

Ein Teil des reflektierten Lichtes 13, 17 wird von den Sensoren 11a, 11b, 15 erfaßt. Die jeweiligen Sensoren 11a, 11b, 15 liefern ein der Intensität des reflektierten Lichtes entsprechend moduliertes Ausgangssignal 18a, 18b, 22, das vom jeweiligen Gleichrichter 19, 23 ausgefiltert wird. Für die Demodulation dieses Signals benötigen die Gleichrichter 19, 23 den richtigen Takt, der von einem Takterzeuger 9, 29 des Mikroprozessors 8 geliefert wird.

Die vom jeweiligen Gleichrichter 19, 23 ermittelten Werte werden dem Analog/Digital-Wandler 26 zugeführt, der die analogen Signale 18a, 18b, 22 in digitale Signale 27 umwandelt, die dem Mikroprozessor 8 zugeführt werden. Er ermittelt aus den Eingangssignalen die entsprechenden Puls-Pausen-Zeiten für die Pulsweitenmodulator-Glieder PWMI und PWMII. Die neuen Puls-Pausen-Zeiten bewirken, daß die Leuchtmittelhelligkeit über den Leistungsteil 5, 6 den Umgebungsbedingungen angepaßt wird. Im beschriebenen Fall wird die Leuchtmittelhelligkeit erhöht, so daß trotz Schneefall, Nebel, Gischt 14 oder dgl. das Fahrzeug von nachfolgenden Verkehrsteilnehmern zuverlässig erkannt wird.

Sobald sich die äußeren Lichtverhältnisse bessern, beispielsweise wenn das Fahrzeug eine Nebelwand 14 wieder verläßt oder der Schmutz 16 vom Lichtfenster 1 entfernt wird, werden die von den Schlußleuchten 4 ausgesandten Strahlen 13, 17 nicht oder nur noch zu einem sehr geringen Teil zu den Sensoren 11a, 11b, 15 reflektiert. Über die beschriebene Schaltung werden die Puls-Pausen-Zeiten entsprechend geändert und dadurch die Leuchtmittelhelligkeit verringert.

Auf die beschriebene Weise ist eine selbsttätige Anpassung der Leuchtstärke der Leuchtmittel 4 an die äußeren Lichtverhältnisse gewährleistet.

In Fig. 1 ist auch der Fall dargestellt, daß auf das Lichtfenster 1 eine starke Sonneneinstrahlung 12 wirkt. Auch in diesem Falle erfolgt eine automatische Anpassung der Leuchtstärke. Die Sonne bzw. die Sonneneinstrahlung 12 selbst dient als Quelle, während im zuvor beschriebenen Fall die geregelten Leuchtmittel 4 als Quelle dienten.

Die Sensoren 11a, 11b liefern ein der Intensität der Sonneneinstrahlung 12 entsprechend moduliertes Ausgangssignal 18a, 18b, das über die Gleichrichter 19, 23 und den Analog/Digital-Wandler 26 dem Mikroprozessor 8 zugeführt wird. Er ermittelt wiederum aus diesen Signalen die Pulspausenzeiten für das Pulsweitenmodulatorglied PWMI bzw. PWMII. Die neuen Puls-Pausen-Zeiten werden dazu herangezogen, die Leuchtmittelhelligkeit zu erhöhen. Dadurch wird erreicht, daß auch bei starker Sonneneinstrahlung das Fahrzeug zuverlässig von nachfolgenden Verkehrsteilnehmern erkannt wird.

Es ist möglich, an der Außenseite des Kraftfahrzeuges eine Wascheinrichtung vorzusehen, die bei entsprechender Verschmutzung der Außenseite des Lichtfensters 1 automatisch betätigt wird. Eine solche Wascheinrichtung ist an den Mikroprozessor 8 angeschlossen und erhält entsprechende Signale, wenn die vom Schmutzsensor 15 kommenden Signale eine entsprechende Verschmutzung des Lichtfensters 1 anzeigen.

Beim Fahren bei Schneefall, im Nebel, bei starker Gischtbildung oder auch bei starker Verschmutzung des Lichtfensters 1 ist es möglich, auch das Bremslicht-Leuchtmittel 2 und die Blinklicht-Leuchtmittel 3 über das Leistungsteil 5 anzusteuern und auch deren Leuchtstärke entsprechend zu erhöhen, wenn die äußeren Sichtbedingungen schlecht sind.

Auf die beschriebene Weise läßt sich auch eine Alterung der Leuchtmittel 2 bis 4 einfach berücksichtigen. Nimmt die Leuchtstärke infolge einer Alterung des Leuchtmittels ab, wird dies vom jeweiligen Sensor 11a, 11b, 15 erkannt. Sie senden in der beschriebenen Weise entsprechende Signale an den Mikroprozessor 8, der das entsprechende gealterte Leuchtmittel so regelt, daß es wieder die ursprüngliche oder zumindest eine höhere Lichtstärke hat.

Ein im Kraftfahrzeug vorgesehener, als EC-Spiegel ausgebildeter Innenrückblickspiegel kann an eine Regelung 31 des Mikroprozessors 8 angeschlossen sein. Fällt von einem nachfolgenden Fahrzeug Scheinwerferlicht auf den EC-Spiegel und sind die Leuchtmittel 2 bis 4 in der beschriebenen Weise mit einer erhöhten Leuchtstärke in Betrieb, erhält die Regelung 31 des Mikroprozessors 8 ein Signal vom EC-Spiegel. Die Leuchtmittel 2 bis 4 werden dann in der beschriebenen Weise angesteuert und in ihrer Leuchtstärke verringert. Somit wird zuverlässig verhindert, daß nachfolgende Fahrzeuge durch die stärker leuchtenden Leuchtmittel 2 bis 4 geblendet werden.

Fällt kein Scheinwerferlicht mehr auf den EC-Spiegel, werden die Leuchtmittel 2 bis 4 über den Mikroprozessor 8 wieder so angesteuert, daß sie in der vorigen Stärke leuchten.

Es ist auch möglich, unabhängig von Sonnenlicht, Nebel- bzw. Gischtbildung, Verschmutzung oder dgl. beim Bremsen die Leuchtstärke der Brems-Leuchtmittel 2 zu erhöhen. Der nachfolgende Verkehrsteilnehmer kann dann frühzeitig erkennen, daß das vorausfahrende Fahrzeug bremst.

Ein ABS-System, ein Tachogenerator, ein Bremspedal oder dgl. des Fahrzeuges kann über wenigstens eine Leitung mit dem AnaIog/Digital-Wandler 26 verbunden. Wird die Bremse betätigt, werden über diese Leitung und den Analog/Digital-Wandler 26 entsprechende Signale an den Mikroprozessor 8 gegeben. In der beschriebenen Weise wird durch Änderung der Puls-Pausen-Zeiten die Helligkeit des Bremslichtes erhöht. Diese Regelung der Bremslicht-Leuchtmittel 2 kann auch erfolgen, wenn die Helligkeit aufgrund der geschilderten äußeren Bedingungen schon erhöht ist.

Vorteilhaft ist es, wenn die Leuchtstärke der Bremslicht-Leuchtmittel 2 erst dann erhöht wird, wenn das Fahrzeug stark abgebremst wird. Bei einem ABS-System oder einem Tachogenerator kann die Bremsverzögerung einfach erfaßt und in Signalform der Steuerung 8 mitgeteilt werden. Die Leuchtstärkenerhöhung tritt in diesem Fall erst dann ein, wenn eine vorgegebene Bremsverzögerung auftritt.

Beim beschriebenen Ausführungsbeispiel - wie auch bei den nachfolgenden Ausführungsbeispielen - können als Leuchtmittel nicht nur Glühlampen und LEDs, sondern beispielsweise Neon- oder PCB (Printed Circuit Board)-Glühlampen und dergleichen eingesetzt werden. Die beschriebene und noch zu beschreibende Sensorik kann konstruktiver Bestandteil der Rückleuchte sein. Es ist aber auch möglich, die Sensorik als eigenständiges Modul in die Rückleuchte zu integrieren.

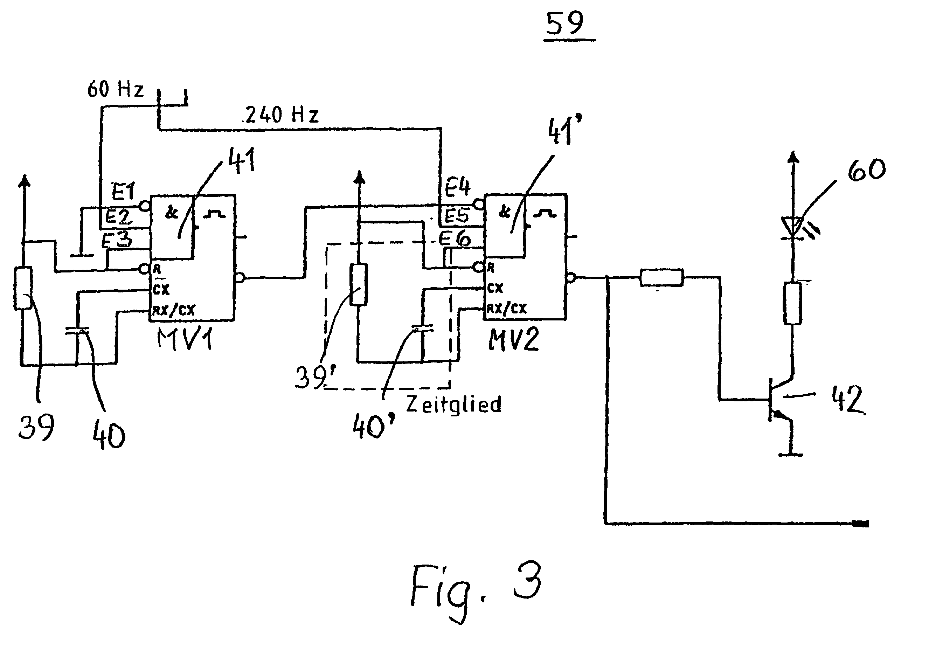

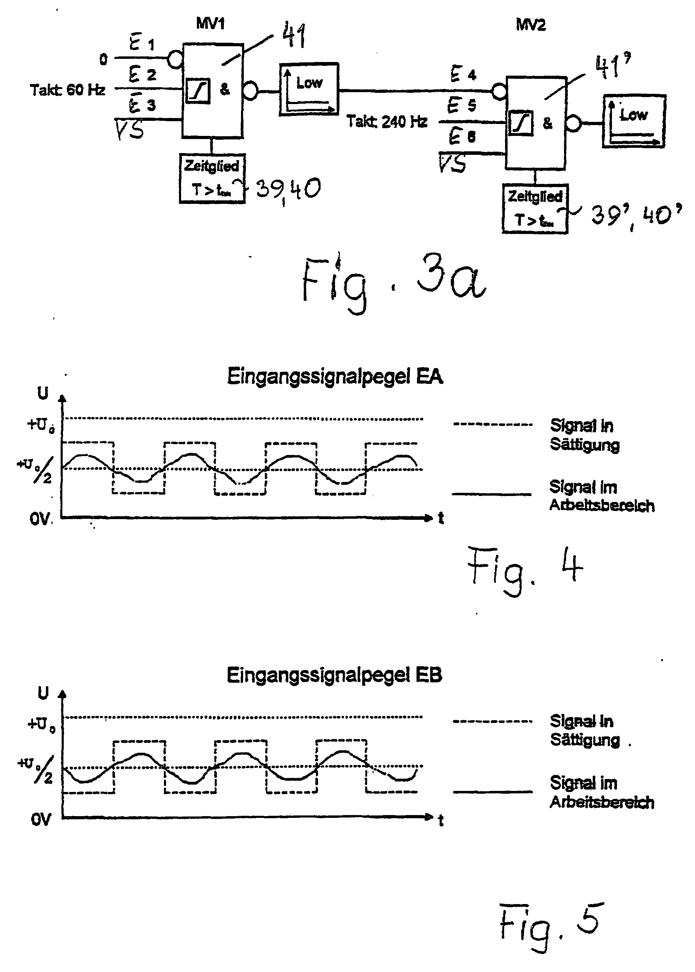

Dem Mikroprozessor 8 ist eine Takt-Ausfallüberwachungseinrichtung 59 nachgeschaltet, der vom Mikroprozessor 8 die an die Leistungsteile 5, 6 gesandten Signale ebenfalls zugeführt werden. Mit dieser Einrichtung 59 kann der ordnungsgemäße Betrieb des Systems sowie der Leuchtmittel 2 bis 4 überwacht werden. Tritt ein Fehler auf, wird beispielsweise eine optische Anzeige 60 betätigt. Anstelle der optischen Anzeige 60 ist auch eine akustische und/oder optische Anzeige möglich. Mit der Takt-Ausfallüberwachungseinrichtung 59 wird das Ausbleiben eines Wechselsignales detektiert. Als Komponenten können beliebige Bausteine verwendet werden, die in der Lage sind, auf das Auftreten eines Pegelwechsels des zu überwachenden Signals mit der Periode t_{Takt} einen verwertbaren Impuls von größerer Dauer als der Periode t_{Takt} zu erzeugen. Im dargestellten Ausführungsbeispiel (Fig. 3 und 3a) werden als Bausteine zwei Multivibratoren MV1 und MV2 verwendet.

Die Funktion der Rückleuchte hängt direkt von der Modulation des von den Leuchtmitteln 2 bis 4 ausgesandten Lichtes und der Ansteuerung des jeweiligen Gleichrichters 19, 23 mit dem entsprechenden Taktsignal ab. Es wird vom Mikroprozessor 8 erzeugt und an die Treiberendstufen bzw. Leistungsteile 5, 6 der Leuchtmittel 2 bis 4 sowie an die Gleichrichter 19, 23 weitergeleitet. Sollte dieses Taktsignal ausfallen, ist das ein Anzeichen dafür, daß das System die Kontrolle über die Leuchtmittel verloren hat.

Die Taktsignale sind Rechtecksignale, wobei die Frequenz für die Schlußleuchte 4 60 Hz, für die Blinkleuchten 3 und die Bremsleuchten 2 240 Hz beträgt. Die beiden Multivibratoren MV1, MV2 sind extern mit jeweils einem Widerstand 39, 39' und jeweils einem Kondensator 40, 40' beschaltet.

Das zu überwachende Signal (Takt: 60Hz) wird beim Multivibrator MV1 einem &-Glied 41 mit drei Eingängen E1, E2, E3 über einen nichtinvertierenden Eingang E2 zugeführt. Gleichzeitig ist der invertierende Eingang E1 mit dem Massepotential (0) und ein nichtinvertierender Eingang E3 mit der Versorgungsspannung VS verbunden (Fig. 3a). Beim Auftreten einer ansteigenden Flanke des Taktsignals am Eingang E2 des &-Gliedes 41 wird der Multivibrator MV1 an seinem Ausgang zur Ausgabe eines Rechteckimpulses mit Low-Niveau veranlaßt. Am Ausgang des Multivibrators MV1 wird der sonst hohe Spannungspegel für eine gewisse Zeit auf Low-Niveau herabgesetzt.

Die Dauer des ausgegebenen Rechteckimpulses des Multivibrators MV1 muß zum einwandfreien Funktionieren der Taktfehlererkennung mindestens genauso lang sein wie eine Taktperiode t_{Takt} des zu überwachenden Signals.

Das Ausgangssignal des Multivibrators MV1 (Low) wird dem invertierenden Eingang E4 eines &-Gliedes 41' des Multivibrators MV2 zugeführt. Das zweite zu überwachende Signal (Takt: 240 Hz) liegt dort am nichtinvertierenden Eingang E5 des Multivibrators MV2 an. Der nichtinvertierende Eingang E6 besitzt den Pegel der Versorgungsspannung VS.

Die in der beschriebenen Schaltung für die Ausgangssignale beider Multivibratoren MV1, MV2 verwendete Pulsweitenkonstante wird durch ein Zeitglied, bestehend aus dem Kondensator 40, 40' und dem Widerstand 39, 39', festgelegt und ist länger als die Periodendauer t_{Takt} des 60 Hz-Taktes. Sie sorgt dafür, daß beim Multivibrator MV2 am Eingang E4 des &-Gliedes 41' immer Low-Niveau anliegt, was dem Massepotential entspricht. Am Eingang E5 des Multivibrators MV2 liegt in genügend kurzen Abständen eine ansteigende Flanke vor (240 Hz), welche das &-Glied 41' dazu veranlaßt, am Ausgang des Multivibrators MV2 ein Low-Signal mit derselben Periodendauer wie am Ausgang des Multivibrators MV1 zu erzeugen. Der Ausgang des Multivibrators MV2 ist der Fehlersignalausgang. Durch die beschriebene Vorgehensweise ist sichergestellt, daß am Ausgang des Multivibrators MV2 immer ein Low-Signal anliegt, solange nicht mindestens eines der zu überwachenden Wechselsignale länger als die gewählte Pulsweitenkonstante ausfällt. Fällt eines der beiden Taktsignale aus, wird am Ausgang des Multivibrators MV2 permanent ein High-Signal als Fehlersignal ausgegeben. Mit diesem Signal kann beispielsweise ein Transistor 42 angesteuert werden, welcher die Anzeige 60, die beispielsweise eine LED ist, einschaltet. Somit kann zuverlässig und einfach ein Fehler erkannt und frühzeitig behoben werden.

Der Mikroprozessor 8 dient zur Takterzeugung und zur Regelung der Leuchtmittel und enthält die Pulsweitenmodulator-Glieder 9.

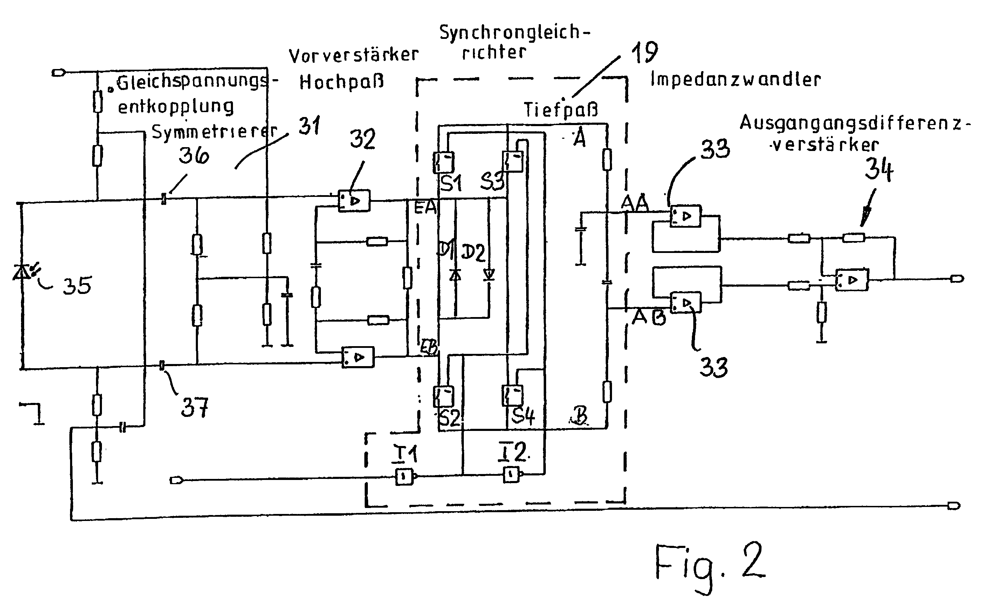

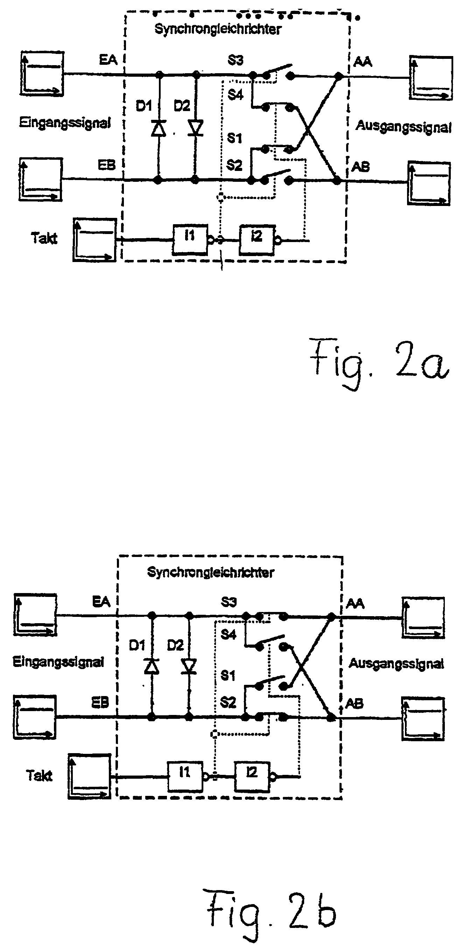

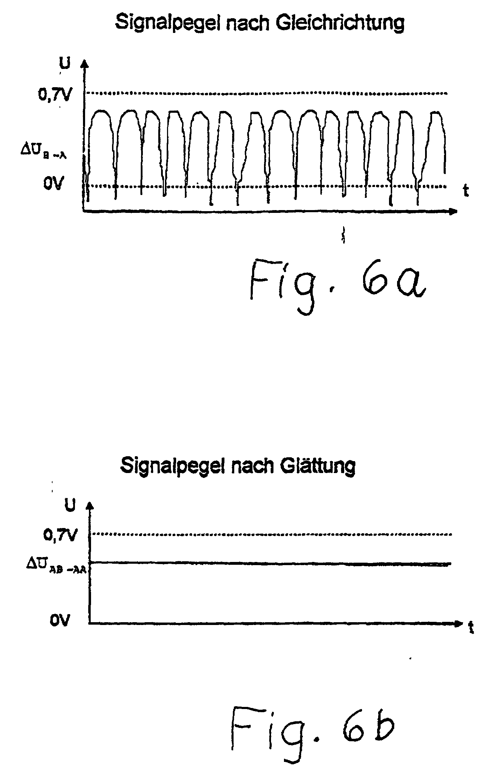

Anhand von Fig. 2 wird die Ausbildung und Funktion des Synchrongleichrichters 19 näher erläutert. Mit dem Synchrongleichrichter soll die Amplitude eines Eingangwechselsignals mit einem Analog/Digital-Wandler zur digitalen Weiterverarbeitung aufbereitet werden. Dazu wird dem Wandler ein Gleichspannungssignal proportional zur Amplitude des Eingangswechselsignals zur Verfügung gestellt. Im wesentlichen besteht der Synchrongleichrichter 19, der gleich ausgebildet ist wie der Synchrongleichrichter 23, aus vier Schaltern. Eine Logikschaltung bereitet ein Taktsignal, das denselben Zustand wie das Signal am Eingang EA des Gleichrichters besitzt, synchron auf. Die Schalter werden so betätigt, daß am Ausgang des Synchrongleichrichters 19 immer eine Gleichspannung vorhanden ist (Fig. 6b).

Der Synchrongleichrichter 19 hat im Ausführungsbeispiel zwei Dioden D1, D2, einen Hex-Inverter I1, I2 und ein Vierfachschalter-IC, das sich aus den Schaltern S1 bis S4 zusammensetzt. Die Dioden D1, D2, die Inverter I1 und I2 und die Schalter S1, S2 sowie S3, S4 liegen parallel zueinander. Der Gleichrichter 19 hat die beiden Eingänge EA und EB, denen durch einen Gleichspannungsentkoppler 31 die mit einem Symmetrierer und einem nachgeschalteten, als Hochpaß ausgebildeten Vorverstärker 32 verarbeiteten Signale zugeführt werden.

Ausgängen AA und AB des Gleichrichters 19 sind zwei Impedanzwandler 33 sowie ein Ausgangsdifferenzverstärker 34 nachgeschaltet.

An den Eingängen EA, EB des Gleichrichters 19 liegt ein Spannungseingangssignal an, das symmetrisch zwischen 0 Volt (GND) und der Versorgungsspannung +U₀ liegt (Fig. 4 und 5). Synchron zu diesem Eingangssignal erhalten die Schalter S1 bis S4 das Taktsignal als Schaltströme, die über die Inverter I1, I2 aufbereitet sind. Wie die Fig. 4 und 5 zeigen, kann das Eingangssignal die beiden Pegelniveaus Takt-High und Takt-Low annehmen. Fig. 4 zeigt den Eingangssignalpegel am Eingang EA und Fig. 5 den Eingangssignalpegel am Eingang EB des Gleichrichters 19. Mit ausgezogenen Linien ist das Signal im Arbeitsbereich und mit gestrichelten Linien das Signal in der Sättigung dargestellt.

Die folgende Beschreibung gliedert sich entsprechend der gleichzurichtenden Eingangssignale und des maßgeblichen Taktes in die beiden Phasen Takt-High und Takt-Low. Besitzt das Taktsignal den Zustand High, fällt im Reflexions/Streufall das von den Leuchtmitteln 2 bis 4 ausgesandte Licht auf eine PIN-Diode 35 (Fig. 2). Dadurch wird diese leitend. Das hohe Spannungsniveau an der Kathode wird abgesenkt (Low). Der Gleichanteil (Tageslicht) wird ausgekoppelt und durch Entkopplungskondensatoren 36, 37 invertiert. Das Wechselsignal wird symmetrisch zur Hälfte der Versorgungsspannung U₀/2 gelegt. Am Eingang EA des Gleichrichters 19 liegt dann eine relativ hohe Spannung an (High). Am Eingang EB des Gleichrichters 19 ist ein verhältnismäßig niedrigeres Spannungsniveau vorhanden (Low). Gleichzeitig (synchron) erhält der Inverter I1 durch das Takteingangssignal denselben Zustand, den das gleichzurichtende Signal am Eingang EA besitzt (High). Der Ausgang des Inverters I1 (Low) ist mit den Schaltern S2 bzw. S3 verbunden, die offen bleiben. Über den Ausgang des zweiten Inverters I2 (High) werden die Schalter S1 und S4 geschlossen. In dieser Phase wird das am Eingang EA des Gleichrichters 19 anliegende High-Signal über den Schalter S4 dem Ausgahg AB des Gleichrichters 19 zugeführt (Fig. 2a). Das niedrigere Signal (Low) des Einganges EB wird über den Schalter S1 auf den Ausgang AA des Gleichrichters 19 gelegt. Die Diode D2 bewirkt eine Begrenzung der Differenzspannung zwischen den beiden Eingängen EA und EB des Gleichrichters 19 auf im Ausführungsbeispiel 0,7 Volt, was einem entsprechenden Spannungsabfall an der Diode entspricht.

Ist die PIN-Diode 35 weniger stark belichtet, ist durch das geringere Leitvermögen die Spannung an der Kathode im Vergleich zur vorhergehenden Phase relativ höher. Am Eingang EA des Gleichrichters 19 liegt, bedingt durch die invertierenden Eigenschaften der Gleichspannungsentkopplung 31, ein niedriger Pegel an (Low). Entsprechend steht am Eingang EB des Gleichrichters 19 ein relativ hohes Spannungsniveau an (High), verglichen mit der vorhergegangenen Phase (Fig. 2b).

Durch die Ansteuerung des Inverters I1 mit niedrigem Spannungsniveau liegt an dessen Ausgang eine hohe Spannung an. Die beiden Schalter S2 und S3 sind geschlossen. Der Inverter 12 bewirkt eine Öffnung der Schalter S1 und S4. Über den Schalter S2 gelangt der High-Pegel vom Eingang EB zum Ausgang AB des Gleichrichters 19. Über den Schalter S3 gelangt das niedrigere Signal (Low) des Eingangs EA zum Ausgang AA des Gleichrichters 19. Die Diode D1 sorgt für eine Begrenzung des Ausgangsdifferenzsignales zwischen den beiden Ausgängen AA und AB auf etwa 0,7 Volt, was einem entsprechenden Spannungsabfall an der Diode entspricht.

Aufgrund dieser Schaltung ist am Ausgang AA des Gleichrichters 19 immer ein niedrigeres Spannungsniveau als an dessen Ausgang AB vorhanden (Fig. 6b). Der Spannungsunterschied zwischen den beiden Ausgängen AB und AA (ΔU_{AB-AA}) ist proportional zur Amplitude des Rechteckeingangssignals (Fig. 4 und 5) zwischen den Eingängen EA und EB des Gleichrichters 19, sofern die Spannungsdifferenz nicht durch die Dioden D1 und D2 begrenzt wird.

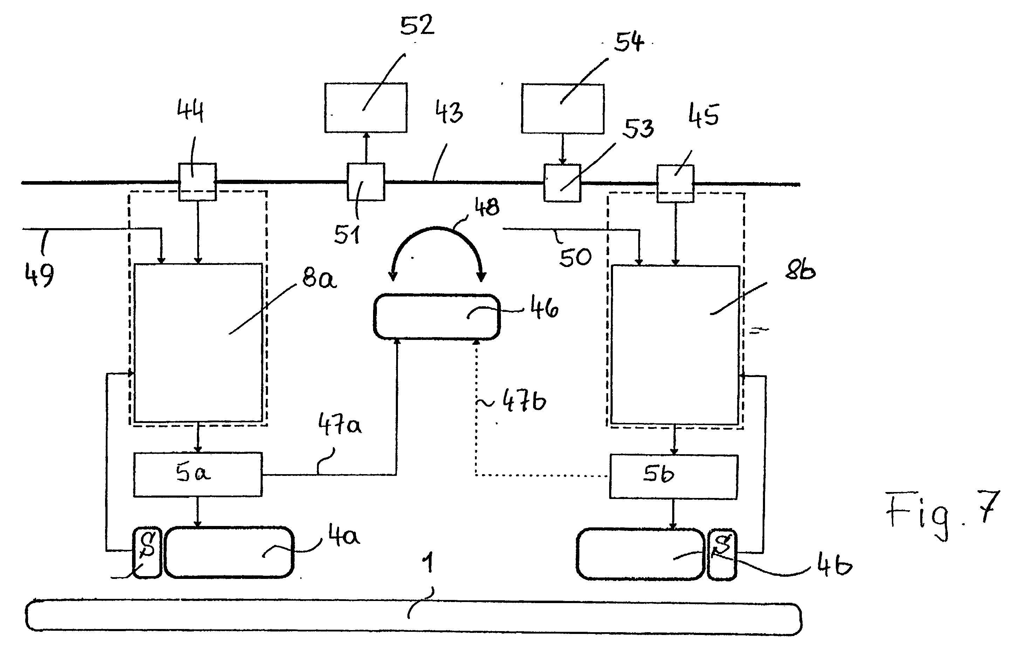

Fig. 7 zeigt in schematischer Darstellung die Möglichkeit, die sensortechnischen Funktionen bzw. die zugehörige Aktorik über ein Bus-System 43 miteinander zu verknüpfen. Das Bus-System ist vorzugsweise ein CAN-Bus-System, das eine zuverlässige Verarbeitung der Signale ermöglicht. An das Bus-System 43 sind über entsprechende Schnittstellen 44, 45 zwei Mikroprozessoren 8a, 8b angeschlossen, mit denen ein linkes Schlußlicht 4a und ein rechtes Schlußlicht 4b in seiner Leuchtstärke geregelt wird. Jeder Schlußleuchte 4a, 4b ist wenigstens ein Sensor S zugeordnet, mit denen in der beschriebenen Weise die Leuchtstärke der Leuchtmittel 4a, 4b in Abhängigkeit von den äußeren Sichtbedingungen und/oder in Abhängigkeit von der Verschmutzung des Lichtfensters 1 geregelt werden kann. Die Sensoren S sind an die zugehörigen Mikroprozessoren 8a, 8b angeschlossen und übersenden ihre Signale in der beschriebenen Weise an die Mikroprozessoren. Sie werten diese Signale in der beschriebenen Weise aus. Über die Leistungsteile 5a, 5b werden die Schlußleuchten 4a, 4b angesteuert und ihre Leuchtstärke geregelt.

Das Fahrzeug hat eine hochgesetzte Bremsleuchte 46, die als Leuchtmittel vorzugsweise LEDs aufweist. Auch diese hochgesetzte Bremsleuchte 46 wird von einem der beiden Mikroprozessoren 8a oder 8b geregelt. Die entsprechenden Regelsignale werden der Bremsleuchte 46 von einer Leitung 47a oder 47b des jeweiligen Verstärkers 5a oder 5b zugeführt.

Die beiden Mikroprozessoren 8a, 8b liegen jeweils in einem Regelkreis, in dem auch die jeweils anzusteuernden Leuchtmittel liegen. Die beiden Regelkreise werden durch einen Überwachungskreis 48 miteinander verknüpft. Er vergleicht die beiden Regelkreise miteinander, um auf diese Weise beispielsweise eine unterschiedliche Verschmutzung der Lichtfenster 1 festzustellen. Sind die beiden Licht fenster 1 des Fahrzeuges ungleichmäßig verschmutzt, müssen die dahinter befindlichen Leuchtmittel entsprechend unterschiedlich stark in ihrer Lichtstärke geregelt werden.

Den beiden Mikroprozessoren 8a, 8b können über Leitungen 49, 50 in herkömmlicher Weise Steuersignale zugeführt werden, wie zum Beispiele Signale, welche die verschiedenen Leuchtmittel 2 bis 4, 4a, 4b betreffen.

Die Leitungen des Bus-Systems 43 können aus Draht bestehen, vorteilhaft aber auch durch Lichtleiter gebildet sein.

An das Bus-System 43 können, wie in Fig. 7 beispielhaft dargestellt ist, über eine Schnittstelle 51 ein Display 52 und über eine Schnittstelle 53 andere Sensoren 54 angeschlossen werden. Über die Schnittstelle 53 können somit Signale beispielsweise eines ABS-Systems, eines Tachogenerators, eines Bremspedales oder dergleichen übertragen werden. Wird beispielsweise die Bremse des Fahrzeuges betätigt, werden über die Schnittstellen 53, 44 bzw. 45 entsprechende Signale an den jeweiligen Mikroprozessor 8a, 8b gegeben. Wie dies erläutert worden ist, wird durch Änderung der Puls-Pausen-Zeiten die Helligkeit des Bremslichtes erhöht. Diese Regelung der Bremslichtleuchtmittel kann auch erfolgen, wenn die Helligkeit aufgrund äußerer Lichtbedingungen schon erhöht ist.

Vorteilhaft ist es, wenn die Leuchtstärke der Bremslicht-Leuchtmittel 2, 46 erst dann erhöht wird, wenn das Fahrzeug stark abgebremst wird. Bei einem ABS-System oder einem Tachogenerator kann die Bremsverzögerung einfach erfaßt und in Signalform dem jeweiligen Mikroprozessor 8a, 8b mitgeteilt werden. Die Leuchtstärkenerhöhung tritt in diesem Falle erst dann ein, wenn eine vorgegebene Bremsverzögerung auftritt. Alternativ kann dadurch auch die Warnblinklichtfunktion aktiviert werden.

Durch die Auswertung von Daten des Sensormoduls bzw. durch Verknüpfung mit anderen an Bord des Fahrzeuges befindlichen Sensoren besteht die Möglichkeit, einzelne Funktionen der Rückleuchte zu aktivieren. Es ist möglich, sowohl eine einfache als auch eine doppelte oder mehrfache Ausführung der sensortechnischen Funktionen bzw. der zugehörigen Aktorik vorzusehen. Über das Bus-System 43 können entsprechend der Skalierbarkeit des Systems Redunanzen vorgesehen werden, die bei einer entsprechenden Auswertung Fail-Safe-Funktionen ermöglichen. Die Skalierbarkeit des Systems ist dadurch gegeben, daß für jedes Fahrzeug unterschiedliche Kennlinien im Mikroprozessor 8, 8a, 8b abgelegt werden können. Auch ist es möglich, in Abhängigkeit vom Verkaufsiand unterschiedliche Kennlinien im jeweiligen Mikroprozessor abzulegen, um die jeweiligen gesetzlichen Vorschriften in den verschiedenen Ländern zu berücksichtigen.

Wird eine mehrfache Ausfertigung entsprechend Fig. 7 verwendet, können Unterschiede an den einzelnen Rückleuchten bzw. deren Leuchtmitteln individuell gesteuert bzw. geregelt werden. So können die Lichtfenster der beiden Rückleuchten eines Fahrzeuges unterschiedlich verschmutzt sein, so daß auch eine unterschiedliche Regelung der entsprechenden Leuchtmittel erforderlich ist.

Wird ein Leuchtmittel ausgewechselt, hat es in der Regel eine andere Leuchtstärke als schon länger im Einsatz befindliche Leuchtmittel, Bei der mehrfachen Ausführung, wie sie beispielhaft in Fig. 7 dargestellt ist, kann das neue Leuchtmittel gesondert geregelt und an die Leuchtstärke der anderen Leuchtmittel in der Rückleuchte angepaßt werden.

Werden Systemfehler erkannt bzw. tritt ein Ausfall von Teilfunktionen auf, können die beschriebenen Fail-Safe-Funktionen beispielsweise ein Notprogramm in Gang setzen und zusätzlich oder ergänzend eine geeignete Fahrerinformation gegeben werden.

Mit den Stromregelelementen in Form der Leistungsteile 5, 6 ist eine stufenlose Pegeleinstellung möglich, so daß an Leuchtmitteln 2 bis 4, 4a, 4b, 46 eine zu jeder Helligkeitsstufe gehörige konstante Bestromung gewährleistet ist. Außerdem ist beispielsweise eine sogenannte Zweipegelschaltung bei beliebig vielen Zwischenstufen möglich. Durch eine Zweipegelschaltung wird erreicht, daß die Leuchtmittel während des Tages mit einer höheren Leuchtstärke als bei Nachtfahrten leuchten.

## Patentansprüche

1. Rückleuchte eines Fahrzeuges, vorzugsweise eines Kraftfahrzeuges, mit einem Brems-, einem Blink- und einem Schlußlicht-Leuchtmittel (2 bis 4, 4a, 4b), die hinter mindestens einem Lichtfenster (1) angeordnet sind, durch welches die von den Leuchtmitteln (2 bis 4, 4a, 4b) ausgesandten Strahlen nach außen treten, wobei im Bereich des Lichtfensters (1) mindestens ein lichtempfindlicher Sensor (11, 11a, 11b, 15, S) angeordnet ist, der an mindestens eines der Leuchtmittel (2 bis 4, 4a, 4b) über eine Regelung (8, 8a, 8b) angeschlossen ist, die in Abhängigkeit von Signalen des Sensors die Leuchtstärke der Leuchtmittel (2 bis 4, 4a, 4b) steuert,
**dadurch gekennzeichnet, daß** der Sensor (11, 11a, 11b, 15, S) im Strahlweg von an der Außenseite des Lichtfensters (1) vorhandenen Schmutzteilchen (16) reflektierten Strahlen (17) liegt, die vom jeweiligen Leuchtmittel (2 bis 4, 4a, 4b) ausgesandt worden sind, und daß die Regelung (8, 8a, 8b) das jeweilige Leuchtmittel (2 bis 4, 4a, 4b) in seiner Leuchtstärke so regelt, daß der an den Schmutzteilchen (16) reflektierte Strahlenanteil wenigstens teilweise ausgeglichen wird.

2. Rückleuchte nach Anspruch 1,
**dadurch gekennzeichnet, daß** der Sensor (11, 11a, 11b, 15, S) hinter dem Lichtfenster (1) angeordnet ist.

3. Rückleuchte nach Anspruch 1,
**dadurch, gekennzeichnet, daß** der Sensor (11, 11a, 11b, 15, S) Teil des Lichtfensters (1) ist.

4. Rückleuchte nach einem der Ansprüche 1 bis 3,
**dadurch gekennzeichnet, daß** der Regelung (8, 8a, 8b) wenigstens ein Leistungsteil (5, 6, 5a, 5b) nachgeschaltet ist, das an die Strom/Spannungsversorgung des Fahrzeuges angeschlossen ist.

5. Rückleuchte nach einem der Ansprüche 1 bis 4,
**dadurch gekennzeichnet, daß** die Signale der Regelung (8, 8a, 8b) moduliert sind.

6. Rückleuchte nach einem der Ansprüche 1 bis 5,
**dadurch gekennzeichnet, daß** die Signale der Regelung (8, 8a, 8b) stromgeregelt sind.

7. Rückleuchte nach einem der Ansprüche 1 bis 6,
**dadurch gekennzeichnet, daß** der Sensor (11, 11a, 11b, 15, S) an einen Analog/Digital-Wandler (26) angeschlossen ist, der vorzugsweise ein SLIO-Controller ist und der vorzugsweise mit der Regelung (8, 8a, 8b) verbunden ist.

8. Rückleuchte nach Anspruch 7,
**dadurch gekennzeichnet, daß** zwischen den Sensor (11, 11a, 11b. 15, S) und den Analog/Digital-Wandler (26) ein Gleichrichter (19, 23) geschaltet ist, der vorzugsweise ein synchroner Gleichrichter ist.

9. Rückleuchte nach einem der Ansprüche 1 bis 8,
**dadurch gekennzeichnet, daß** die Regelung (8, 8a, 8b) ein Mikroprozessor ist.

10. Rückleuchte nach einem der Ansprüche 1 bis 9,
**dadurch gekennzeichnet, daß** mindestens ein Sensor (11, 11a, 11b, 15, S) im Strahlweg von durch das Lichtfenster (1) von außen kommenden Strahlen liegt.

11. Rückleuchte, insbesondere nach einem der Ansprüche 1 bis 10,
**dadurch gekennzeichnet, daß** die Leuchtstärke der Leuchtmittel (2 bis 4, 4a, 4b, 46) in Abhängigkeit von auf einen Innenrückblickspiegel des Fahrzeuges fallendem Scheinwerferlicht eines nachfolgenden Fahrzeuges steuerbar ist.

12. Rückleuchte nach Anspruch 11,
**dadurch gekennzeichnet, daß** der insbesondere als EC-Spiegel ausgebildete Innenrückblickspiegel, der vorzugsweise über wenigstens eine Leitung (32, 43, 49, 50) mit der Regelung (8, 8a, 8b) verbunden ist, mindestens einen lichtempfindlichen Sensor aufweist, dessen Ausgangssignale der Regelung (8, 8a, 8b) zuführbar sind.

13. Rückleuchte, insbesondere nach einem der Ansprüche 1 bis 12,
**dadurch gekennzeichnet, daß** die Leuchtstärke zumindest des Bremslichtes (2, 46) bei einem Bremsvorgang erhöht wird, bei dem vorzugsweise Signale an den Analog/Digital-Wandler (26) gesendet werden.

14. Rückleuchte nach Anspruch 13,
**dadurch gekennzeichnet, daß** eine Steuerung/Regelung eines ABS-Systems, eines Tachogenerators, eines Bremspedals und dgl. an ein Bussystem (43) des Fahrzeuges angeschlossen ist.

15. Rückleuchte nach Anspruch 14,
**dadurch gekennzeichnet, daß** die Regelung (8, 8a, 8b) an das Bussystem (43) angeschlossen ist, das vorzugsweise ein CAN-Bussystem ist.

16. Rückleuchte nach einem der Ansprüche 1 bis 15,
**dadurch gekennzeichnet, daß** der Regelung (8, 8a, 8b) eine Takt-Überwachungseinrichtung (59) nachgeschaltet ist, die ein Taktsignal an die Leuchtmittel (2 bis 4, 4a, 4b, 46) sendet.

17. Rückleuchte nach einem der Ansprüche 1 bis 16,
**dadurch gekennzeichnet, daß** das Warnblinklicht bei maximal möglicher Verzögerung (Bremvorgang) aktivierbar ist.

18. Rückleuchte nach einem der Ansprüche 1 bis 17,
**dadurch gekennzeichnet, daß** beliebige Sensoren über ein SLIO-(serial linked I/O) Modul (54) über das Bussystem (43) in die Regelung (8a, 8b) mit einbezogen werden können.

19. Rückleuchte nach Anspruch 18,
**dadurch gekennzeichnet, daß** im Fahrzeug vorhandene Sensoren über das SLIO-Modul (54) anschließbar sind.

20. Rückleuchte nach einem der Ansprüche 1 bis 19,
**dadurch gekennzeichnet, daß** beliebige Meldungen aus der Regelung (8a, 8b) oder von Teilnehmern am Bussystem (43) an eine Anzeigeeinheit (52) ausgebbar sind.

21. Rückleuchte nach einem der Ansprüche 1 bis 20,
**dadurch gekennzeichnet, daß** das komplette System über das Bussystem (43) skalierbar ist.

22. Rückleuchte nach einem der Ansprüche 1 bis 21,
**dadurch gekennzeichnet, daß** über das Bussystem (43) eine wechselseitige Überwachung (48) stattfindet.

## Claims

1. A rear light of a vehicle, preferably a motor vehicle, with a braking illumination means, an indicator illumination means and a rear-light illumination means (2 to 4, 4a, 4b) which are arranged behind at least one light glass (1), through which the beams emitted by the illumination means (2 to 4, 4a, 4b) emerge, wherein at least one light-sensitive sensor (11, 11a, 11b, 15, S) is arranged in the region of the light glass (1) and is linked to at least one of the illumination means (2 to 4, 4a, 4b) via a control device (8, 8a, 8b), which controls the light intensity of the illumination means (2 to 4, 4a, 4b) as a function of signals from the sensor,
**characterised in that** the sensor (11, 11a, 11b, 15, S) lies within the beam of rays (17) reflected on dirt particles (16) present on the outside of the light glass (1), the said rays being emitted by the respective illumination means (2 to 4, 4a, 4b), and **in that** the control device (8, 8a, 8b) controls the light intensity of the respective illumination means (2 to 4, 4a, 4b) in such a way that the part of the beam reflected on the dirt particles (16) is at least partially compensated.

2. A rear light according to Claim 1,
**characterised in that** the sensor (11, 11a, 11b, 15, S) is arranged behind the light glass (1).

3. A rear light according to Claim 1,
**characterised in that** the sensor (11, 11a, 11b, 15, S) is part of the light glass (1).

4. A rear light according to one of Claims 1 to 3,
**characterised in that** at least one power component (5, 6, 5a, 5b) is connected downstream of the control device (8, 8a, 8b), the said power component being linked to the current/voltage supply of the vehicle.

5. A rear light according to one of Claims 1 to 4,
**characterised in that** the signals from the control device (8, 8a, 8b) are modulated.

6. A rear light according to one of Claims 1 to 5,
**characterised in that** the signals from the control device (8, 8a, 8b) are current-controlled.

7. A rear light according to one of Claims 1 to 6,
**characterised in that** the sensor (11, 11a, 11b, 15, S) is linked to an analog-digital converter (26), which is preferably a SLIO controller and is preferably connected to the control device (8, 8a, 8b).

8. A rear light according to Claim 7,
**characterised in that** a rectifier (19, 23), preferably a synchronous rectifier, is connected between the sensor (11, 11a, 11b, 15, S) and the analog-digital converter (26).

9. A rear light according to one of Claims 1 to 8,
**characterised in that** the control device (8, 8a, 8b) is a microprocessor.

10. A rear light according to one of Claims 1 to 9,
**characterised in that** at least one sensor (11, 11a, 11b, 15, S) lies within the beam of rays entering through the light glass (1) from outside.

11. A rear light, in particular according to one of Claims 1 to 10,
**characterised in that** the light intensity of the illumination means (2 to 4, 4a, 4b, 46) can be controlled as a function of the light from the headlight of a following vehicle falling on the interior rear-view mirror of the vehicle.

12. A rear light according to Claim 11,
**characterised in that** the interior rear-view mirror, which is designed in particular as an EC mirror and is preferably connected to the control device (8, 8a, 8b) via at least one lead (32, 43, 49, 50), has at least one light-sensitive sensor the output signals of which may be fed to the control device (8, 8a, 8b).

13. A rear light, in particular according to one of Claims 1 to 12, **characterised in that** the light intensity at least of the brake light (2, 46) is increased during a braking operation, during which signals are preferably transmitted to the analog/digital converter (26).

14. A rear light according to Claim 13,
**characterised in that** a controller/regulator of an ABS system, a tachogenerator, a brake pedal and the like are linked to a bus system (43) of the vehicle.

15. A rear light according to Claim 14,
**characterised in that** the control device (8, 8a, 8b) is linked to the bus system (43), which is preferably a CAN bus system.

16. A rear light according to one of Claims 1 to 15,
**characterised in that** a frequency monitoring device (59), which transmits a frequency signal to the illumination means (2 to 4, 4a, 4b, 46), is connected downstream of the control device (8, 8a, 8b).

17. A rear light according to one of Claims 1 to 16,
**characterised in that** the warning indicator may be activated with maximum possible delay (braking process).

18. A rear light according to one of Claims 1 to 17,
**characterised in that** any of the sensors can be incorporated into the control device (8a, 8b) via a SLIO (serial-linked I/O) module (54) via the bus system (43).

19. A rear light according to Claim 18,
**characterised in that** sensors present in the vehicle are linkable via the SLIO module (54).

20. A rear light according to one of Claims 1 to 19,
**characterised in that** any of the data from the control device (8a, 8b) or from devices associated with the bus system (43) may be output to an indicator unit (52).

21. A rear light according to one of Claims 1 to 20,
**characterised in that** the complete system is scalable via the bus system (43).

22. A rear light according to one of Claims 1 to 21,
**characterised in that** reciprocal monitoring (48) takes place via the bus system (43).

## Revendications

1. Feu arrière de véhicule, notamment d'un véhicule automobile, comportant un moyen d'éclairement de freinage, un moyen d'éclairement clignotant et un moyen d'éclairement de feux arrière (2 à 4, 4a, 4b), qui sont disposés en arrière d'au moins une plage éclairante (1), par laquelle les rayonnements émis par les moyens d'éclairement (2 à 4, 4a, 4b) peuvent sortir, et dans lesquels il est prévu dans la zone de la plage éclairante (1), au moins un capteur photosensible (11,11a,11b,15,S), qui est raccordé à au moins l'un des moyens d'éclairement (2 à 4, 4a, 4b) par l'intermédiaire d'une unité de régulation (8, 8a, 8b), qui, en fonction de signaux du capteur, commandent l'intensité d'éclairement des moyens d'éclairement (2 à 4, 4a, 4b), **caractérisé en ce que** le capteur (11,11a,11b,15,S) est situé dans le trajet de rayons (17) réfléchis par des particules de saleté (16) présentes sur la face extérieure de la plage éclairante (1) et qui ont été émis par les moyens d'éclairement respectifs (2 à 4, 4a, 4b), et que la régulation (8,8a,8b) règle l'intensité d'éclairement des moyens d'éclairement respectifs (2 à 4, 4a, 4b) de telle sorte que l'unité partie du rayonnement, qui est réfléchie sur les particules de saleté (16), est au moins partiellement compensée.

2. Feu arrière selon la revendication 1, **caractérisé en ce que** le capteur (11,11a,11b,15,S) est disposé en arrière de la plage éclairante (1).

3. Feu arrière selon la revendication 1, **caractérisé en ce que** le capteur (11,11a,11b,15,S) fait partie de la plage éclairante (1).

4. Feu arrière selon l'une des revendications 1 à 3, **caractérisé en ce qu'**en aval de l'unité de régulation (8,8a,8b) est disposée au moins une unité de puissance (5,6,5a,5b), qui est raccordée à l'alimentation en courant/tension du véhicule.

5. Feu arrière selon l'une des revendications 1 à 4, **caractérisé en ce que** les signaux de l'unité de régulation (8,8a,8b) sont modulés.

6. Feu arrière selon l'une des revendications 1 à 5, **caractérisé en ce que** les signaux de l'unité de régulation (8,8a,8b) sont réglés du point de vue courant.

7. Feu arrière selon l'une des revendications 1 à 6, **caractérisé en ce que** le capteur (11,11a,11b,15,S) est raccordé à un convertisseur analogique/numérique (26), qui de préférence est un contrôleur SLIO et qui est relié de préférence à l'unité de régulation (8,8a,8b).

8. Feu arrière selon la revendication 7, **caractérisé en ce qu'**entre le capteur (11,11a,11b,15,S) et le convertisseur analogique/numérique (26) est branché un redresseur (19,23), qui est de préférence un redresseur synchrone.

9. Feu arrière selon l'une des revendications 1 à 8, **caractérisé en ce que** l'unité de régulation (8,8a,8b) est un microprocesseur.

10. Feu arrière selon l'une des revendications 1 à 9, **caractérisé en ce qu'**au moins un capteur (11,11a,11b, 15,S) est disposé dans le trajet des rayons arrivant de l'extérieur et traversant la plage éclairante (1).

11. Feu arrière, notamment selon l'une des revendications 1 à 10, **caractérisé en ce que** l'intensité d'éclairement du feu arrière (2 à 4, 4a, 4b, 46) est commandable en fonction de la lumière des phares d'un véhicule suivant, qui rencontre le rétroviseur intérieur du véhicule.

12. Feu arrière selon la revendication 11, **caractérisé en ce que** le rétroviseur intérieur, qui est agencé notamment sous la forme d'un miroir EC et qui est relié à l'unité de régulation (8,8a,8b) de préférence au moyen d'une ligne (32,43,49,50), comporte au moins un capteur photosensible, dont les signaux de sortie peuvent être envoyés à l'unité de régulation (8,8a,8b).

13. Feu arrière selon l'une des revendications 1 à 12, **caractérisé en ce que** l'intensité lumineuse du feu stop (2,46) est accrue dans le cas d'un processus de freinage, lors duquel de préférence des signaux sont envoyés au convertisseur analogique/numérique (26).

14. Feu arrière selon la revendication 13, **caractérisé en ce qu'**une unité de commande/régulation d'un système ABS, d'un générateur tachymétrique, d'une pédale d'accélérateur et analogue est raccordée à un système de bus (43) du véhicule.

15. Feu arrière selon la revendication 14, **caractérisé en ce que** l'unité de régulation (8,8a,8b) est raccordée au système de bus (43), qui est de préférence le système de bus CAN.

16. Feu arrière selon l'une des revendications 1 à 15, **caractérisé en ce qu'**en aval de l'unité de régulation (8,8a, 8b) est branché un dispositif de contrôle de cadence (59), qui envoie un signal de cadence aux moyens d'éclairement (2 à 4, 4a, 4b, 46).

17. Feu arrière selon l'une des revendications 1 à 16, **caractérisé en ce que** la lumière clignotante d'avertissement peut être activée dans le cas du retard maximal possible (processus de freinage).

18. Feu arrière selon l'une des revendications 1 à 17, **caractérisé en ce que** des capteurs quelconques peuvent être conjointement insérés dans l'unité de régulation (8a,8b) par l'intermédiaire du module SLIO (serial linked I/O), au moyen du système de bus 43.

19. Feu arrière selon la revendication 18, **caractérisé en ce que** les capteurs présents dans le véhicule peuvent être raccordés au moyen du module SLIO (54).

20. Feu arrière selon l'une des revendications 1 à 19, **caractérisé en ce que** des signalisations quelconques peuvent être délivrées depuis l'unité de régulation (8a,8b) ou d'abonnés au système de bus (43) à une unité d'affichage (52).

21. Feu arrière selon l'une des revendications 1 à 20, **caractérisé en ce que** le système complet peut être soumis à un cadrage d'échelle.

22. Feu arrière selon l'une des revendications 1 à 21, **caractérisé en ce qu'**un contrôle alternatif (48) est exécuté par l'intermédiaire du système de bus (43).
